# EUROPEAN PATENT SPECIFICATION

(11) **EP 3 004 267 B1**
(45) Date of publication and mention of the grant of the patent: **28.08.2019**
(21) Application number: 14808165.6
(22) Date of filing: 22.05.2014
(51) Int. Cl.: C09D 175/04, C08G 18/48

(54) **URETHANE COATING COMPOSITION FOR METAL SUBSTRATE**
URETHANBESCHICHTUNGSZUSAMMENSETZUNG FÜR METALLSUBSTRAT
COMPOSITION DE REVÊTEMENT EN URÉTHANNE POUR SUBSTRAT MÉTALLIQUE

(30) Priority: 07.06.2013 US 201361832254 P
(43) Date of publication of application: 13.04.2016
(73) Proprietor: SWIMC LLC, Cleveland, Ohio 44115 (US)
(72) Inventor: BOESPFLUG, Donald, W., Lino Lakes, MN 55014 (US); DEBROY, Tapan, Victoria, MN 55415 (US); HARTINGER, Dan, Hudson, WI 54016 (US)
(74) Representative: Vossius & Partner Patentanwälte Rechtsanwälte mbB
(86) International application number: PCT/US2014/039196
(87) International publication number: WO 2014/197215

(56) References cited:
- EP-A1- 1 142 924
- US-A1- 2004 142 177
- US-A1- 2008 248 223
- US-A1- 2009 110 843
- US-A1- 2011 030 893
- US-A1- 2013 042 659
- US-A1- 2013 131 285

## Description

### CROSS-REFERENCE TO RELATED APPLICATION(S)

This application claims priority from U.S. Provisional Application Serial No. 61/832,254, filed 07 June 2013.

### BACKGROUND

The application of coatings to metals to retard or inhibit corrosion is well established. Polyurethane coatings are often used for corrosion protection of steel, as these coatings are economical and relatively easy to apply. The coatings dry quickly and have good impact resistance, making the coatings especially useful for coating steel components to be transported or shipped over large distances, for example. The use of polyurethane coatings on unprimed metal surfaces reduces the cost of material and machinery required to make metal substrates durable and resistant to corrosion.

Presently, however, most polyurethane systems directly applied to unprimed or un-pretreated metal surfaces show inconsistent adhesion on various substrates, and in the absence of primer or pretreatment, the metal surface tends to corrode and blister quickly in humid conditions. Coatings modified with epoxy resins to improve adhesion tend to degrade and lose color and gloss on exposure to sunlight.

From the foregoing, it will be appreciated that there is a need for polyurethane coating compositions that can be applied to metal substrates with good adhesion and optimal corrosion resistance, while maintaining color and gloss on prolonged exposure to sunlight.

### SUMMARY

This invention provides a solvent-based urethane coating composition useful in a variety of applications such as, for example, as a direct-to-metal coating, i.e. a coating composition that can be applied directly to the surface of a metal substrate without a primer, or more preferably, without a pretreatment. The coating composition preferably includes a polyol that is the reaction product of a resin of general formula (I) with an acid or a diol, with the reaction being carried out in the presence of a catalyst. The coating composition also includes an isocyanate-functional compound as a crosslinker. The coating composition forms a corrosion-resistant film when applied directly to the substrate surface without a primer or pretreatment.

In an embodiment, the urethane coating composition includes a polyol that is the reaction product of a resin of general formula (I) and an acid or diol, with the reaction
being carried out in the presence of a catalyst. The resin has the structure shown below as formula (I): 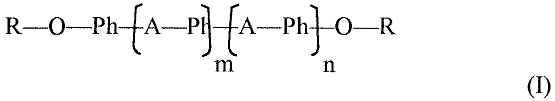 wherein:
- each A is independently a substituted or unsubstituted divalent aliphatic group having from 1 to about 6 carbon atoms (C1-C6 alkyl or alkenyl), an unsubstituted divalent aromatic group having from 6 to about 10 carbon atoms, a divalent aromatic group substituted with an organic group having from 1 to 4 carbon atoms (C1-C4 alkyl or alkenyl), a halogen, -OR'O, wherein R' is unsubstituted or substituted C₁-C₄ alkyl, -C(O)-, -O-, -S-, -S(O)-, or -S(O)₂-;
- each Ph is independently an unsubstituted phenylene ring, or a phenylene ring substituted with hydrogen, an organic group having from 1 to 4 carbon atoms (C1-C4 alkyl or alkenyl), a halogen, or -OR
- each R is independently H, C1-C4 alkyl, or an epoxide of the formula: 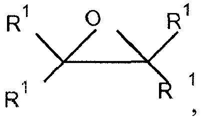 wherein each R¹ is independently H, unsubstituted C1-C4 alkyl, or C1-C4 alkyl substituted with -OH or C1-C4 alkoxy; and
- m is 0 or 1; and
- n is between 0 and 6.

The present description provides a urethane coating composition that includes the polyol described herein, and an isocyanate-functional compound used as a crosslinker. The coating composition is useful in coating a variety of substrates, preferably metal substrates. In preferred embodiments, the coating composition is useful as a corrosion-resistant direct-to-metal coating that can be applied over a wide variety of metal substrates without a primer or other pretreatment. In alternative embodiments, the coating composition may be applied as a corrosion-resistant or rust-proofing primer. The coating composition may also have utility in a variety of other coating end uses, including, for example, coatings for non-galvanized metal, wood, masonry, aluminum, machinery, motors, tools, toolboxes, transportation equipment, cabinets, steel bars and railings, pipelines, drums, conduit, ducts, furniture, marking hazard areas, color coding equipment, and the like.

In one embodiment, a method of coating a substrate is provided herein. The method includes: providing a metal substrate, and applying to at least a portion of the substrate a urethane coating composition that includes a polyol that is reaction product of a resin of general formula (I) with an acid, and an isocyanate-functional compound as a crosslinker. This is followed by curing the composition to provide a corrosion-resistant coating on the substrate surface. Typically, the substrate is a metal substrate, although the coating composition may be used to coat other substrate materials if desired.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list. Unless otherwise indicated, the structural representations included herein are not intended to indicate any particular stereochemistry and are intended to encompass all stereoisomers.

### DEFINITIONS

As used herein, the term "organic group" means a hydrocarbon group (with optional elements other than carbon and hydrogen, such as oxygen, nitrogen, sulfur, and silicon) that is classified as an aliphatic group, a cyclic group, or combination of aliphatic and cyclic groups (e.g., alkaryl and aralkyl groups). The term "cyclic group" means a closed ring hydrocarbon group that is classified as an alicyclic group or an aromatic
group, both of which can include heteroatoms. The term "alicyclic group" means a cyclic hydrocarbon group having properties resembling those of aliphatic groups.

The term "aryl group" (e.g., an arylene group) refers to a closed aromatic ring or ring system such as phenylene, naphthylene, biphenylene, fluorenylene, and indenyl, as well as heteroarylene groups (i.e., a closed aromatic or aromatic-like ring hydrocarbon or ring system in which one or more of the atoms in the ring is an element other than carbon (e.g., nitrogen, oxygen, sulfur, etc.)). Suitable heteroaryl groups include furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, benzofuranyl, benzothiophenyl, carbazolyl, benzoxazolyl, pyrimidinyl, benzimidazolyl, quinoxalinyl, benzothiazolyl, naphthyridinyl, isoxazolyl, isothiazolyl, purinyl, quinazolinyl, pyrazinyl, 1-oxidopyridyl, pyridazinyl, triazinyl, tetrazinyl, oxadiazolyl, thiadiazolyl, and so on. When such groups are divalent, they are typically referred to as "arylene" or "heteroarylene" groups (e.g., furylene, pyridylene, etc.)

A group that may be the same or different is referred to as being "independently" something.

Substitution is anticipated on the organic groups of the compounds of the present invention. The term "group" is used to describe a chemical substituent, where the described chemical material includes the unsubstituted group and that group with O, N, Si, or S atoms, for example, in the chain (as in an alkoxy group) as well as carbonyl groups or other conventional substitution. For example, the phrase "alkyl group" is intended to include not only pure open chain saturated hydrocarbon alkyl substituents, such as methyl, ethyl, propyl, t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether groups, haloalkyls, nitroalkyls, carboxyalkyls, hydroxyalkyls, sulfoalkyls, etc. As used herein, the term "group" is intended to be a recitation of both a particular moiety, as well as a recitation of the broader class of substituted and unsubstituted structures that includes the moiety.

The term "phenylene" as used herein refers to a six-carbon atom aryl ring (e.g., as in a benzene group) that can have any substituent groups (including, e.g., hydrogen atoms, halogens, hydrocarbon groups, oxygen atoms, hydroxyl groups, etc.). Thus, for example, the following aryl groups are each phenylene rings: -C₆H₄-, -C₆H₃(CH₃)-, and -C₆H(CH₃)₂Cl-.

The term "polyol" refers to a polymer with two or more hydroxyl (-OH) groups. As used herein, the term may refer to different types of polyols, including, for example, polyether polyols, polyester polyols, and the like.

The term "crosslinker" refers to a molecule capable of forming a covalent linkage between polymers or between two different regions of the same polymer.

As used herein, the term "direct-to-metal" (DTM) implies that a coating composition is applied directly to the surface of a metal substrate, where the substrate has not been previously coated with a primer, pretreatment or other coating. As used herein, the term "pretreatment" refers to any organic coating applied to a substrate surface prior to the application of a paint or other protective coating, but does not include standard procedures and/or substances used to clean or prepare the surface, such as, for example, blasting, phosphate-treating, and the like. Therefore, a DTM coating applied without pretreatment may be applied to a clean-blasted surface, a phosphate-treated surface, and the like. DTM coatings combine the adhesion and corrosion resistance of a traditional primer coating with the durability, weatherability and gloss of a topcoat composition. Unless otherwise indicated, a DTM coating does not require prior pretreatment or application of a primer, or the subsequent application of a topcoat.

The term "on," when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (e.g., polymers of two or more different monomers). Similarly, unless otherwise indicated, the use of a term designating a polymer class such as, for example, "polyether" is intended to include both homopolymers and copolymers (e.g., polyether- ester copolymers).

The terms "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "a" polyether can be interpreted to mean that the coating composition includes "one or more" polyethers.

Also herein, the recitations of numerical ranges by endpoints include all numbers subsumed within that range (e.g., 1 to 5 includes 1, 1.5, 2, 2.75, 3, 3.80, 4, 5, etc.). Furthermore, disclosure of a range includes disclosure of all subranges included within the broader range (e.g., 1 to 5 discloses 1 to 4, 1.5 to 4.5, 4 to 5, etc.).

### DETAILED DESCRIPTION OF ILLUSTRATIVE EMBODIMENTS

Disclosed herein is a urethane coating composition that includes a polyol that is a reaction product of a resin of general formula (I) with an acid or a diol. The composition also includes an isocyanate-functional compound as a crosslinker, and provides a corrosion-resistant film when applied to a metal substrate. Although the ensuing discussion focuses primarily on direct-to-metal coatings, it is contemplated that the composition described herein, as well as variations thereof, may be applied as primers or topcoats, and on a variety of different substrates, and for a variety of other end uses.

Coating compositions described herein preferably include at least a film-forming amount of the urethane described herein, along with a crosslinker. In addition, the coating composition may also include one or more additional ingredients such as, for example, a liquid carrier, and any other optional additives. Suitable additives include pigments, dispersing agents, uv stabilizers, adhesion promoters, and the like.

Coating compositions of the present invention may have utility in a variety of coating end uses, preferably end uses that employ a metal substrate. Preferred coating compositions exhibit a superior combination of coating properties, including optimal adhesion to the substrate, flexibility, impact resistance, corrosion resistance, durability, uv resistance (i.e. the coatings maintain optimal color and/or gloss after significant exposure to uv radiation), and a blister-free appearance. It is also contemplated that the coating composition may have utility in coating applications where a single-phase
coating, i.e. a direct-to-metal coating that can be used without a primer or pretreatment of the substrate, is desired.

In preferred embodiments, the polyol described herein, is derived from a resin of the general formula (I): 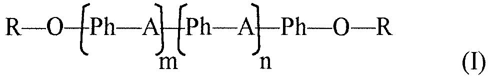 wherein:
- each A is independently a substituted or unsubstituted divalent aliphatic group having from 1 to about 6 carbon atoms (C1-C6 alkyl or alkenyl), an unsubstituted divalent aromatic group having from about 6 to about 10 carbon atoms, a divalent aromatic group substituted with an organic group having from 1 to 4 carbon atoms (C1-C4 alkyl or alkenyl), a halogen, -OR'O, wherein R' is unsubstituted or substituted C₁-C₄ alkyl, -C(O)-, -O-, -S-, -S(O)-, or -S(O)₂-;
- each Ph is independently an unsubstituted phenylene ring, or a phenylene ring substituted with hydrogen, an organic group having from 1 to 4 carbon atoms (C1-C4 alkyl or alkenyl), a halogen, or -OR
- each R is independently H, C1-C4 alkyl, or an epoxide group of the formula: 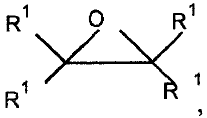 wherein R¹ is independently H, unsubstituted C1-C4 alkyl, or C1-C4 alkyl substituted with -OH or C1-C4 alkoxy;
- m is 0 or 1; and
- n is between 0 and 6.

In preferred embodiments, each R in general formula (I) is an epoxide group, wherein when one of R¹ is independently -CH₂-,the other is hydrogen.

In some embodiments, in the general formula (I), each A is independently a organic group, such as, for example, a hydrocarbon group having from 1 to 6 carbon atoms (C1-C6 alkyl, alkenyl, or aryl), -C(O)-, -O-, -S-, -S(O)-, or -S(O)₂-. Although unsubstituted alkyl or aryl groups are preferred, each A is intended to include not only pure open chain saturated hydrocarbon alkyl groups, such as methyl, methylene, ethyl,
propyl, t-butyl, and the like, but also alkyl substituents bearing further substituents known in the art, such as hydroxy, alkoxy, alkylsulfonyl, halogen atoms, cyano, nitro, amino, carboxyl, etc. Similarly, where A is an aryl group, each A is intended to include not only unsubstituted arylene rings, but also arylene rings substituted with saturated alkyl groups, alkenyl groups or aralkyl groups bearing further substituents known in the art, such as hydroxy, alkoxy, alkylsulfonyl, halogen atoms, cyano, nitro, amino, carboxyl, and the like. Each A may also include arylene rings substituted with other substituents known in the art, including, without limitation, halogen substituents (Cl, Br, I, and the like), -OR'O groups, wherein R' is substituted or unsubstituted C1-C4 alkyl, or -OR groups, wherein each R is independently H, C1-C4 alkyl, or an epoxide group of the formula: 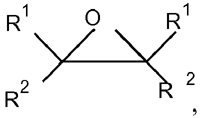 wherein R¹ and R² are independently H, unsubstituted C1-C4 alkyl, or C1-C4 alkyl substituted with -OH or C1-C4 alkoxy. In a preferred embodiment, each A in general formula (I) is a methylene group, -CH₂-, when m in general formula (I) is 1, and a phenylene ring substituted with an OR'O group, wherein R' is -CH₂-CH(OH)-CH₂-, when m in general formula (I) is 0.

In preferred embodiments, the group -Ph- in general formula (I) represents an aromatic ring, specifically a phenylene ring. In an aspect, the phenylene ring is unsubstituted at the carbon atoms not attached to the A or -O-R segments of general formula (I), i.e. Ph is a symbol representing a -C₆H₄- group. In another aspect, each Ph is independently a phenylene ring substituted with hydrogen, a saturated or unsaturated hydrocarbon group with 1 to 4 carbon atoms, more preferably a saturated hydrocarbon group that may optionally include one or more heteroatoms other than carbon or hydrogen atoms (e.g., N, O, S, Si, a halogen atom, etc.). Examples of suitable hydrocarbon groups may include substituted or unsubstituted alkyl groups (e.g., methyl, ethyl, propyl, butyl groups, etc., including isomers thereof), alkenyl groups, alkynyl groups, alicyclic groups, aryl groups, or combinations thereof. Suitable other substitutes on the phenylene ring in general formula (I) also include halogens such as Cl, Br, and the
like, -OR'O, wherein R' is unsubstituted or substituted C₁-C₄ alkyl, or -OR groups, wherein each R is independently H, C1-C4 alkyl, or an epoxide group of the formula: 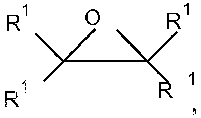 wherein each R¹ is independently H, unsubstituted C1-C4 alkyl, or C1-C4 alkyl substituted with -OH or C1-C4 alkoxy. In a preferred embodiment, each Ph in general formula (I) is independently an unsubstituted phenylene ring, or a phenylene ring substituted with hydrogen, or a phenylene ring substituted with -OR, wherein R is an epoxide group of the formula:

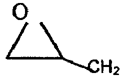

In the general formula (I), n is selected based on the desired molecular weight of the polyol described herein. In an aspect, the desired molecular weight (number average molecular weight, Mₙ) is dictated by the ultimate end use of the urethane coating composition. Typically, the desired molecular weight of the polyol is preferably between 400 and 6000, and more preferably 1000 to 3000. Accordingly, in the general formula (I), n is between 0 and 6, preferably 0.05 to 4, more preferably 0.5 to 3.

In a preferred embodiment, the polyol described herein is derived from a resin with the following structure (A) or (B): 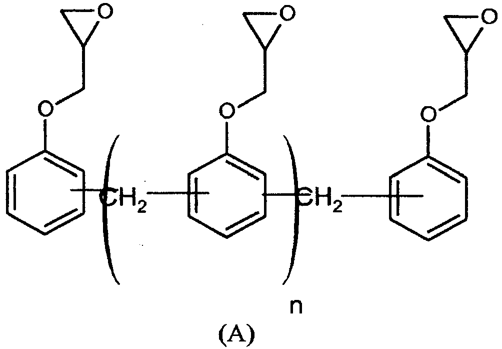 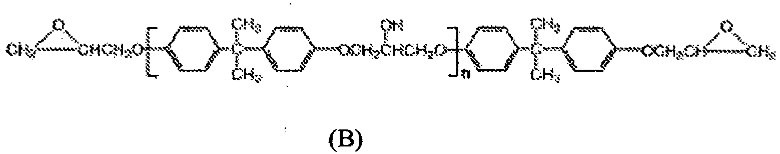 The structure (A) represents a resin of the general structural formula (I) where R is an epoxide group with one R¹ as -CH₂- and the remaining R¹ as H, each A is -CH₂-, each Ph (i.e. each phenylene ring) is independently unsubstituted or substituted with an -OR group, wherein R is an epoxide group as shown, m is 1, and n is 1.6 to 3.5. The structure (B) represents a resin of the general structural formula (I), where each R is an epoxide group as defined above, each -Ph- is a phenylene ring substituted with a dimethylbenzyl group, -each A is a phenylene ring substituted with OR'O-, wherein R' is -CH₂-CH(OH)-CH₂-, m is 0, and n is 0.05 to 0.1.

According to the present disclosure, the polyol described herein is the product of the reaction of a resin of the general formula (I) with an acid or diol. Suitable acids include aliphatic and aromatic monocarboxylic and dicarboxylic acids, saturated and/or unsaturated fatty acids, and the like. In an aspect, aliphatic acids used in the preparation of the polyol described herein include monocarboxylic acids, such as, for example, acetic acid, butanoic acid, hexanoic acid, acrylic acid, methacrylic acid, 2-ethyl hexanoic acid, cyanoacrylic acid, crotonic acid, dodecanoic acid, fatty acid dimers, and the like. In another aspect, aliphatic acids used in the preparation of the polyol described herein include dicarboxylic acids such as, for example, succinic acid, glutaric acid, adipic acid, azelaic acid, suberic acid, sebacic acid, decane di-acid, dodecane di-acid, abietic acid, acid dimers, and the like. The aliphatic acids may be straight-chain or branched acids. In yet another aspect, aromatic acids used in the preparation of the polyol described herein include aromatic monocarboxylic acids, such as, without limitation, alkyl substituted aromatic acids, alkenyl substituted aromatic acids, or hydroxy substituted aromatic acids. Examples include benzoic acid, hydroxy benzoic acid, cinnamic acid, and the like. In another aspect, aromatic acids include dicarboxylic acids such as, for example, isophthalic acid, terephthalic acid, phthalic acid, naphthalene dicarboxylic acid, 1,4- cyclohexane dicarboxylic acid (CHDA), oxy dibenzoic acid and the like. In an embodiment, a monocarboxylic aromatic acid, preferably benzoic acid, is used.

Suitable diols used in the preparation of the polyol described herein include aliphatic diols selected from unsubstituted or alkyl-substituted aliphatic diols. Examples include, without limitation, ethylene glycol, diethylene glycol, triethylene glycol, 1,2-propanediol, 1,3-propanediol, 1,2-butanediol, 1,3-butanediol, 1,4-butanediol, pentanediol, hexanediol, trimethylol propane, glycerol, and the like. In an embodiment, an unsubstituted diol, preferably 1,4-butanediol, is used.

The acid or diol is present in an amount sufficient to react substantially all the epoxide groups, if present, in general formula (I). In an aspect, the amount of acid or diol needed to react substantially all the epoxide groups depends on the value of n in general formula (I), i.e. larger amounts of the acid or diol may be required for larger values of n. In a preferred embodiment, where n is preferably between 0.05 and 3, the amount of acid or diol sufficient to react substantially all the epoxide groups in general formula (I) is preferably between 1 to 4 moles, more preferably 1.5 to 3.5 moles. As used herein, reacting substantially all the epoxide groups in the resin implies that the epoxy equivalent weight per 100 g of the polyol is 0.0001 to 0.01.

The polyol described herein is the product of a reaction between a compound of general formula (I) and an acid or diol. This reaction is carried out in the presence of a reaction catalyst. Suitable catalysts include trialkyl amines, monoalkyl diaryl amines, dialkylaryl amines, triaryl amines, trialkyl phosphines, monoalkyl diaryl phosphines, dialkyl aryl phosphines, trialkyl phosphines, quarternary ammonium compounds, quarternary phosphonium compounds, alkali metal halides, and the like. Quarternary ammonium or phosphonium compounds, and dialkyl aryl amines are preferred. In a preferred embodiment, the reaction catalyst is preferably present in an amount of at least 0.01 wt-%, and more preferably at least 0.1 wt-%, based on the weight of nonvolatile material in the coating composition. The reaction catalyst is preferably present in an amount of no greater than 3 wt-%, and more preferably no greater than 1 wt-%, based on the weight of nonvolatile material in the coating composition.

Coating compositions that include the urethane described herein are cured by crosslinking with one or more curing agents (i.e., crosslinking resins, sometimes referred to as "crosslinkers"). The choice of particular crosslinker typically depends on the particular product being formulated.

Suitable examples of such curing agents are hydroxyl-reactive curing resins such as phenoplasts, aminoplast, isocyanate-functional compounds, dianhydrides, or mixtures thereof.

Suitable phenoplast resins include the condensation products of aldehydes with phenols. Formaldehyde and acetaldehyde are preferred aldehydes. Various phenols can be employed such as phenol, cresol, p-phenylphenol, o-tert-butylphenol, p-tert- butylphenol, p-tert-amylphenol, cyclopentylphenol, and the like.

Suitable aminoplast resins are the condensation products of aldehydes such as formaldehyde, acetaldehyde, crotonaldehyde, furfural, benzaldehyde, and the like, with amino- or amido-group-containing substances such as urea, melamine, and benzoguanamine. Examples of suitable aminoplast crosslinking resins include, without limitation, benzoguanamine-formaldehyde resins, melamine-formaldehyde resins, etherified melamine-formaldehyde, and urea-formaldehyde resins.

Suitable isocyanate-functional compounds include, without limitation, blocked or unblocked aliphatic, cycloaliphatic or aromatic di-, tri-, or poly-valent isocyanates, such as hexamethylene diisocyanate, isophorone diisocyanate and the like. Further non- limiting examples of generally suitable unblocked or blocked isocyanates include isomers of isophorone diisocyanate, dicyclohexylmethane diisocyanate, toluene diisocyanate, diphenylmethane diisocyanate, phenylene diisocyanate, tetramethyl xylene diisocyanate, xylylene diisocyanate, and mixtures thereof. In some embodiments, unblocked or blocked isocyanates are used that have an Mₙ of at least 300, more preferably at least 650, and even more preferably at least 1,000.

Polymeric unblocked or blocked isocyanates are useful in certain embodiments. Some examples of suitable polymeric blocked isocyanates include a biuret or isocyanurate of a diisocyanate, a trifunctional "trimer," or a mixture thereof. Examples of suitable blocked polymeric isocyanates include TRIXENE BI 7951, TRIXENE BI 7984, TRIXENE BI 7963, TRIXENE BI 7981 (TRIXENE materials are available from Baxenden Chemicals, Ltd., Accrington, Lancashire, England), DESMODUR BL 3175A, DESMODUR BL3272, DESMODUR BL3370, DESMODUR BL 3475, DESMODUR BL 4265, DESMODUR PL 340, DESMODUR VP LS 2078, DESMODUR VP LS 2117,
and DESMODUR VP LS 2352 (DESMODUR materials are available from Bayer Corp., Pittsburgh, PA, USA), or combinations thereof.

Suitable dianhydrides include, without limitation, anhydrides of saturated and unsaturated carboxylic acids.

The level of curing agent (i.e., crosslinker) used will typically depend on the type of curing agent, the time and temperature of the bake, the molecular weight of the binder polymer, and the desired coating properties. If used, the crosslinker is typically present in an amount of up to 50 wt%, preferably up to 30 wt%, and more preferably up to 15 wt-%. If used, a crosslinker is preferably present in an amount of at least 0.1 wt%, more preferably at least 1 wt-%, and even more preferably at least 1.5 wt%. These weight percentages are based upon the total weight of the resin solids in the coating composition.

Accordingly, in a preferred embodiment, the present invention provides a urethane coating composition that includes a polyol derived from resins of formula (I) as described above, and a curing agent or crosslinker. In an embodiment, the crosslinker is preferably an isocyanate-functional compound as described above, such as, for example, polyisocyanates such as 2,4-toluenediisocyanate, hexamethylenediisocyanate, polymethylene-polyphenyl diisocyanate, methylenediphenyldiisocyanate, cyclic trimers, cocyclic trimers, or mixtures thereof. In a preferred embodiment, the isocyanate- functional crosslinker is a trimer. Examples of suitable trimers include, without limitation, trimerization products prepared from on average three diisocyanate molecules or a trimer prepared from on average three moles of diisocyanate (e.g., HMDI) reacted with one mole of another compound such as, for example, a triol (e.g., trimethylolpropane).

A method of making a urethane coating composition is described herein. The method includes providing a resin of the general formula (I) and reacting it with an acid or a diol to provide a polyol. In an aspect, the acid or diol is present in an amount sufficient to react all epoxide groups present in the resin of formula (I). In another aspect, the reaction is carried out in the presence of a reaction catalyst.

In an embodiment, the described polyol formed by reaction of the resin of formula (I) with an acid or diol has a theoretical hydroxyl equivalent weight of 100 to 400, preferably 150 to 350. In an embodiment, the polyol has a hydroxyl (OH) number of 100 to 400, preferably 150 to 350.

In a preferred embodiment, a polyol formed by the reaction of a resin of general formula (I) with an acid has a theoretical hydroxyl equivalent weight of 300 to 350, preferably 300 to 320, and a hydroxyl (OH) number of 150 to 250, preferably 175 to 200. In an alternative preferred embodiment, a polyol formed by the reaction of a resin of general formula (1) with a diol has a theoretical hydroxyl equivalent weight of 150 to 250, preferably 170 to 200, and a hydroxyl (OH) number of 200 to 400, preferably 300 to 350.

In an embodiment, the reaction of a resin of general formula (I) with an acid or diol results in a reaction product (i.e. the polyol described herein) having a non-volatile solids concentration of 70 to 80%, and a viscosity of 1000 to 5000 centipoise (Gardner viscosity of approximately X to Z-3).

The reaction to produce the polyol is carried out a temperature of 50°C to 250°C, preferably from 100°C to 200°C, for 2 hours to 15 hours, preferably 4 hours to 12 hours. Reaction temperatures and time can vary substantially, but are selected to obtain a polyol where substantially all epoxide groups in the resin of general formula (I) have been reacted.

In the methods described herein, the formed polyol is cured by crosslinking with an isocyanate-functional compound to produce a urethane coating composition. In an embodiment, the isocyanate-functional compound is used in an amount sufficient to produce an OH:NCO ratio from 1:1 to 3:1. In an embodiment, where the polyol is formed by the reaction of a resin of formula (1) with an acid, the OH:NCO ratio is preferably 3:1, more preferably 2.82:1. In another embodiment, where the polyol is formed by the reaction of a resin of formula (I) with a diol, the OH:NCO ratio is preferably 2:1, more preferably 1.63:1.

The present description is directed to a urethane composition that can be used as a corrosion-resistant coating applied to a substrate, preferably a metal substrate such as, for example, cold-rolled steel (CRS), iron phosphate-treated steel, or aluminum. In an aspect, the urethane coating composition may be used as a corrosion-resistant primer, pretreatment or direct-to-metal coating. In a preferred aspect, the urethane composition can be used to form a corrosion-resistant coating when applied directly to a metal substrate without the use of a primer or pretreatment, i.e. as a direct-to-metal coating. Conventionally, direct-to-metal coatings show poor or inconsistent adhesion over various substrates. Therefore, for optimal corrosion resistance, high quality pretreatments are applied to the metal substrate before the application of the direct-to-metal coating. Without pretreatment, the metal substrate shows poor corrosion resistance and significant blistering in a humid environment. Surprisingly, and in contravention of expectations in the art, the urethane coating composition described herein demonstrates good corrosion resistance without any blistering over various metal substrates when used as a direct-to- metal coating.

Conventionally, polyols derived from epoxy resins are used to make urethane coating compositions that provide good adhesion. However, such coatings do not typically provide optimal corrosion resistance or good weathering, with significant yellowing of the coating observed on exposure to uv radiation. Surprisingly, and contrary to expectations in the art, the urethane coating composition described herein, which is made from an epoxy resin-derived polyol, demonstrates excellent corrosion resistance as well as good weathering. Moreover, the urethane coating described herein has high gloss and retains strong color and gloss even after significant or prolonged uv exposure.

As discussed above, in certain preferred embodiments, the coating composition of the present invention is suitable as a corrosion-resistant direct-to-metal coating. Without limiting to theory, it is believed that the corrosion resistance of the coating composition described herein may depend on the glass transition temperature (T_{g}) of the urethane polymer. In an embodiment, the urethane polymer of the present invention preferably has T_{g} of at least 25°C, more preferably at least 30°C, and even more preferably at least 40°C. In preferred embodiments, the T_{g} is less than 100°C, more preferably less than 80°C, and even more preferably less than 60°C. Varying the T_{g}, for example by varying the structure of the resins of general formula (I), or by varying the isocyanate-functional crosslinker, can provide coating compositions with different properties for use in different applications. A different range of T_{g} may be necessary if the urethane composition described herein is subject to an e-coat cure rather than a forced air dry, for example.

The polymers of the present invention can be applied to a substrate as part of a coating composition that includes a liquid carrier. The liquid carrier may be water, organic solvent, or mixtures of various such liquid carriers. Accordingly, liquid coating compositions of the present invention may be either water-based or solvent-based systems. Examples of suitable organic solvents include glycol ethers, alcohols, aromatic or aliphatic hydrocarbons, dibasic esters, ketones, esters, and the like, and combinations thereof. Preferably, such carriers are selected to provide a dispersion or solution of the polymer for further formulation. In an aspect, the properties of the urethane coating composition described herein may be altered if the coating is a high solids coating, i.e. the resin of general formula (I) is a solid resin rather than a liquid resin. In a preferred aspect, the coating composition described herein is dispersed in a liquid carrier and applied by standard commercial methods known in the art, such as for example, spraying, electrocoating, extrusion coating, laminating, powder coating, and the like.

The amount of the urethane polymer in the composition described herein may vary depending on a variety of considerations such as, for example, the method of application, the presence of other film-forming materials, whether the coating composition is water-based or solvent-based, etc. For liquid-based coating compositions, the urethane composition described herein will typically constitute at least 10 wt%, more typically at least 30 wt%, and even more typically at least 50 wt% of the coating composition, based on the total weight of resin solids in the coating composition.

In one embodiment, the coating composition is an organic solvent-based composition preferably having at least 50 wt% non-volatile components (i.e. solids), more preferably at least 60 wt% non-volatile components, and most preferably at least 70 wt% non-volatile components. In an embodiment, the non-volatile film-forming components preferably include at least 50 wt% of the urethane polymer described herein, more preferably at least 55 wt% of the polymer, and even more preferably at least 60 wt% of the polymer. For this embodiment, the non-volatile film-forming components preferably include no greater than 95 wt% of the polymer of the present invention, and more preferably no greater than 85 wt% of the polymer.

A coating composition of the present invention may also include other optional ingredients that do not adversely affect the coating composition or a cured coating composition resulting therefrom. Such optional ingredients are typically included in a coating composition to enhance coating aesthetics; to facilitate manufacturing, processing, handling, and application of the composition; and to further improve a particular functional property of a coating composition or a cured coating composition resulting therefrom. For example, the composition described herein invention may optionally include fillers, catalysts, lubricants, pigments, surfactants, dyes, colorants, toners, coalescents, extenders, anticorrosion agents, flow control agents, thixotropic agents, dispersing agents, antioxidants, adhesion promoters, light stabilizers, and mixtures thereof, as required to provide the desired film properties. Each optional ingredient is preferably included in a sufficient amount to serve its intended purpose, but not in such an amount to adversely affect a coating composition or a cured coating composition resulting therefrom.

Useful optional ingredients include pigments, such as, for example, titanium dioxide, iron oxide yellow, and the like. Suitable pigments for use with the composition described herein are known to those of skill in the art, and may be varied for a desired coating color or appearance. If used, a pigment is present in the coating composition in an amount of no greater than 70 wt%, more preferably no greater than 50 wt%, and even more preferably no greater than 40 wt%, based on the total weight of solids in the coating composition.

Wetting agents, dispersing agents and surfactants may be optionally added to the coating composition to aid in flow and wetting of the substrate. Examples of surfactants, include, but are not limited to, nonylphenol polyethers and salts and similar surfactants known to persons skilled in the art. If used, a surfactant is preferably present in an amount of at least 0.01 wt-%, and more preferably at least 0.1 wt-%, based on the weight of resin solids. If used, a surfactant is preferably present in an amount no greater than 10 wt-%, and more preferably no greater than 5 wt-%, based on the weight of resin solids.

The coating composition described herein may be used as a direct-to-metal coating, and the composition may be applied as a single layer, as two layers, or even multiple layers. Alternatively, the coating composition may also be used as a primer coating, a pretreatment coating, an intermediate coating, or a topcoat. The coating thickness of a particular layer and the overall coating system will vary depending upon the coating material used, the substrate, the coating application method, and the end use for the coated article. When used as a direct-to-metal coating, the thickness of the applied coating film is preferably 0.5 to 3 mil, more preferably 1 to 2 mil, and even more preferably 1.2 to 1.8 mil.

The coating composition of the present invention may be applied to a substrate either prior to, or after, the substrate is formed into an article.

After applying the coating composition onto a substrate, the composition can be cured using a variety of processes, including, for example, oven baking by either conventional or convectional methods, or any other method that provides an elevated temperature suitable for curing the coating. The curing process may be performed in either discrete or combined steps.

The cure conditions will vary depending upon the method of application and the intended end use. The curing process may be performed at any suitable temperature, including, for example, oven temperatures in the range of from 100°C to 300°C, and more typically from 177°C to 250°C.

### TEST METHODS

Unless indicated otherwise, the following test methods were utilized in the Examples that follow.

### Adhesion

Adhesion testing is performed according to ASTM D 3359 - Test Method B. Adhesion is generally rated on a scale of 0B to 5B where a rating of "5B" indicates no adhesion failure, i.e. no loss of paint from a crosshatch, a rating of "2B" indicates 15 to 35% paint loss from the crosshatch, and a rating of "0B" indicates greater than 65% paint loss from the crosshatch. Adhesion ratings of 5B and no less than 4B are typically desired for commercially viable coatings.

### Impact Resistance

The direct and reverse impact resistance of cured coatings is tested using the methods described in ASTM D2794 (Standard Test Method for Resistance of Organic Coatings to the Effects of Rapid Deformation). Briefly, the coatings to be tested are applied to metal panels and cured. A standard weight is dropped a specific distance to strike an indenter that deforms the cured coating and the substrate to which it is applied. Results are expressed as the weight (in lb) dropped when the coating fails, typically by cracking.

### Corrosion Resistance (Salt Fog)

The corrosion resistance of cured coatings prepared from the composition described herein is tested using the salt fog method, as described in ASTM B117 (Standard Practice for Operating Salt Fog Apparatus). Results are expressed on a scale of 0-10, where "0" indicates the coating is completely corroded, observed by bubbling or blistering of the film in all areas, and "10" indicates the coating is unchanged from before it was subjected to the corrosive environment. Rust ratings for coatings subjected to salt fog exposure in a humid environment are also expressed on a scale of 0-10 where "0" indicates complete surface rust, and "10" indicates no surface rust.

### Corrosion Resistance (Creep)

The corrosion resistance of cured coatings prepared from the composition described herein is also tested by measuring creep after exposure to a corrosive environment, as described in ASTM D1654-08 (Standard Test Method for Evaluation of Painted or Coated Specimens Subjected to Corrosive Environments). A coating is applied to a panel and cured. The panel is then scribed to metal and exposed to salt fog for a given period of time. Paint loss from the scribe is measured, and results are expressed as the amount of creep (in mm) from the scribe. For commercially viable coatings, creep from scribe of 3 mm or less is desired.

### Flexibility

The flexibility of cured coatings prepared from the composition described herein is tested using the mandrel bend test, as described in ASTM D522 (Standard Test Methods for Mandrel Bend test for Attached Organic Coatings). Results are expressed as the length (in mm) to which a coating film can be elongated (or bent) before the film cracks.

### Pencil Hardness

The hardness of cured coatings prepared from the powder compositions is tested using by the pencil method, as described in ASTM D3363 (Standard Test Method for Film Hardness by Pencil Test). Results are reported in terms of the last successful pencil prior to film rupture. Thus, for example, if a coating does not rupture when tested with a 2H pencil, but ruptures when tested with a 3H pencil, the coating is reported to have a pencil hardness of 2H.

For the present evaluation, coatings were applied to panels of various substrates at a film thickness of about 1.4 mil and subjected to the tests described above.

In the following, the disclosure of the present application is summmarized:
1. A urethane coating composition, comprising:
   (1) a polyol that is the reaction product of
      a) a resin having the general formula (I) 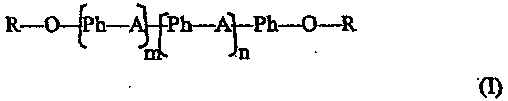 wherein:
         each A is independently a substituted or unsubstituted divalent aliphatic group having from 1 to about 6 carbon atoms, an unsubstituted divalent aromatic group having from 6 to about 10 carbon atoms, a divalent aromatic group substituted with an organic group having from 1 to 4 carbon atoms (C1-C4 alkyl or alkenyl), a halogen, -OR'O, wherein R' is unsubstituted or substituted C₁-C₄ alkyl, -C(O)-, -O-, -S-, -S(O)-, or - S(O)₂-;
         each Ph is independently a an unsubstituted phenylene ring, or a phenylene ring substituted with H, C₁-C₄ alkyl, Cl, Br, or -OR;
         each R is independently H, C₁-C₄ alkyl, or an epoxide of the formula 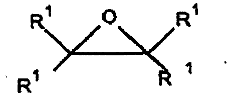
         wherein R¹ is independently H, unsubstituted C₁-C₄ alkyl, or C₁-C₄ alkyl substituted with -OH, or C₁-C₄ alkoxy;
         m is 0 or 1; and
         n is between 0 and 6; and
      (b) an acid or diol present in an amount sufficient to react substantially all the epoxide groups, if present, in component (a), wherein the reaction is carried out in the presence of a reaction catalyst; and
   (2) an isocyanate-functional compound.
2. The coating composition of item 1, wherein each R in the general formula (I) is an epoxide wherein each R¹ and R² is independently-CH₂- or H.
3. The coating composition of item 1, wherein each A in the general formula (1) is a methylene group and m is 1.
4. The coating composition of item 1, wherein each A in the general formula (I) is a phenylene ring substituted with an -OR'O- group, wherein R' is -CH₂-CH(OH)-CH₂-, and m is 0.
5. The coating composition of item 1, wherein each Ph is independently an unsubstituted phenylene ring or a phenylene ring substituted with an -OR group, wherein R is an epoxide of the formula 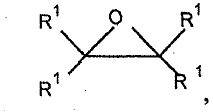 wherein each R¹ is independently -CH₂- or H.
6. The coating composition of item 1, wherein each Ph is independently an unsubstituted phenylene ring or a phenylene ring substituted with a dimethylbenzyl group.
7. The coating composition of item 1, wherein n is between 1.0 and 2.0.
8. The coating composition of item 1, wherein the resin of general formula (I) has the structure: 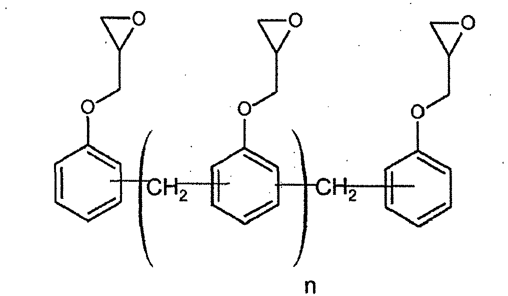 wherein n is between 1.0 and 2.0.
9. The coating composition of item 1, wherein the acid is an aromatic acid selected from an unsubstituted aromatic acid, alkyl substituted aromatic acid, alkenyl substituted aromatic acid, or hydroxy substituted aromatic acid.
10. The coating composition of item 8, wherein the aromatic acid is benzoic acid.
11. The coating composition of item 1, wherein the amount of acid or diol sufficient to react substantially all the epoxide groups is about 1 to 5 moles.
12. The coating composition of item 1, wherein the amount of acid or diol sufficient to react substantially all the epoxide groups is about 2 to 4 moles.
13. The coating composition of item 1, wherein the reaction catalyst is selected from trialkyl amines, dialkylaryl amines, salts of quarternary ammonium compounds, salts of quarternary phosphonium compounds, and alkali metal halides.
14. The coating composition of item 1, wherein the reaction catalyst is tetramethyl ammonium chloride.
15. The coating composition of item 1, wherein the polyol has an OH number of about 150 to 350.
16. The coating composition of item 1, wherein the OH:NCO ratio of the urethane composition is about 0.5:1 to 2:1.
17. The coating composition of item 1, wherein the resin of general formula (I) has the structure: 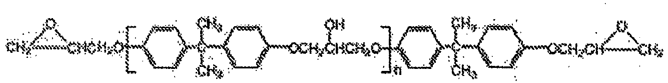 and n is 0.05 to 0.1.
18. The coating composition of item 1, wherein the diol is an aliphatic diol selected from unsubstituted or alkyl-substituted propanediol, butanediol, pentanediol, hexanediol, and mixtures thereof.
19. The coating composition of item 1, wherein the diol is 1,4-butanediol.
20. The coating composition of item 1, wherein the reaction catalyst is dimethylbenzylamine.
21. The coating composition of item 1, wherein the isocyanate-functional compound is a polyisocyanate selected from selected from 2,4-toluenediisocyanate, 2,6-toluenediisocyanate, 4,4'-methylenediphenyldiisocyanate, hexamethylenediisocyanate, polymethylene-polyphenylisocyanate, cyclic trimers, cocyclic trimers, and mixtures thereof.
22. A method of coating a substrate,
   comprising: providing a metal substrate;
   applying to the substrate a urethane composition comprising
      a reaction product of a polyol according to item 1, and an isocyanate-functional compound; and
   curing the composition to provide a corrosion-resistant coating.
23. A method of making a polyol, comprising:
   providing a resin of the general formula (I): 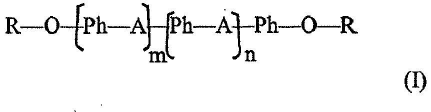 wherein:
   each A is independently a substituted or unsubstituted divalent aliphatic group having from 1 to about 6 carbon atoms, a substituted or unsubstituted aromatic group having from 6 to about 10 carbon atoms, a divalent aromatic group substituted with an organic group having from 1 to 4 carbon atoms (C1-C4 alkyl or alkenyl), a halogen, -OR'O, wherein R' is unsubstituted or substituted C₁-C₄ alkyl, -C(O)-, -O-, -S-, -S(O)-, or -S(O)₂-; each Ph is independently an unsubstituted phenylene ring, or a phenylene ring substituted with H, C₁-C₄ alkyl, Cl, Br, or -OR; each R is independently H, C₁-C₄ alkyl, or an epoxide of the formula 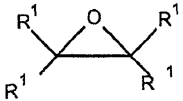
   wherein R¹ is independently H, unsubstituted C₁-C₄ alkyl, or C₁-C₄ alkyl substituted with -OH, or C₁-C₄ alkoxy,
      m is 0 or 1; and
      n is between 0 and 6; and
   reacting the resin with an acid or diol in the presence of a reaction catalyst, wherein the acid or diol is reacted in an amount sufficient to react substantially all the epoxide groups of the resin.
24. A urethane coating composition, comprising
   a polyol made by the method of item 23; and
   an isocyanate-functional compound;
wherein the coating composition forms a corrosion resistant film when applied directly to a metal substrate without pretreatment.

### EXAMPLES

The following examples are offered to aid in understanding of the present invention and are not to be construed as limiting the scope thereof. Unless otherwise indicated, all parts and percentages are by weight. The constructions cited were evaluated by tests as follows:

### Example 1: Preparation of polyol #1

A solution of 1059 g of a novolac epoxy resin (obtained from Dow) in methylethyl ketone or MEK was charged into a 4-neck, 3-liter round bottom flask, along with 610 g (approximately 5 moles) of benzoic acid in the presence of 1.5 g of tetramethyl ammonium chloride as a catalyst. The mixture was heated under a nitrogen blanket to a temperature of 130°C and the MEK was allowed to boil off during the course of the reaction and was collected through a condenser. The reaction was sampled after four hours and the epoxy value was measured to be 10. The residual MEK was stripped off and 647 g of butyl acetate were added slowly through an additional funnel while the reactants were cooled to room temperature. The resulting reaction product was a polyol resin with 71.5% non-volatile content and a Gardner viscosity of X. The theoretical hydroxy equivalent (on a 100% solids basis) was 302, corresponding to OH number of 187.

### Example 2: Preparation of Urethane Coating Composition

To prepare a urethane composition or paint with the polyol #1 (prepared as described in Example 1), 10.07 g of butyl acetate was added to a metal container, followed by 144.07 g of polyol #1. An additional quantity of butyl acetate was then added with agitation, along with the pigments, dispersing agents, flocculating agents and the like, required to formulate a paint of a specific volume. The mixture was ground in a horizontal media mill to a Hegman grind of 7. The mixture was let down into 17.09 g butyl acetate with slow agitation, and 346.20 g of polyol #1 was added, along with 94.82 g of butyl acetate, an acrylic-based tint paste, dibutyltindilaurate as a stabilizer, flow agents, pigments, and an adhesion promoter. The paint formulation was then mixed with a commercially available standard HDI trimer at a paint:isocyanate ratio of 2.82: 1.

### Reference Example 3: Preparation of polyol #2

A solution of 752 g of a conventional epoxy resin derived from BPA (EPON 828, obtained from Momentive) was charged into a 4-neck, 3-liter round bottom flask, along with 540 g of 1,4-butanediol in the presence of 1.5 g of dimethylbenzyl amine as a catalyst. The mixture was heated under a nitrogen blanket to a temperature of 190°C and reacted for 12 hours. The reaction was sampled and the epoxy value was measured to be
11.5. The reactor contents were cooled to 120°C and 681 g of butyl acetate were added slowly through an addition funnel while the reactants were cooled to room temperature. The resulting reaction product was a polyol resin with72.9% non-volatile content and a
Gardner viscosity of Z3. The theoretical hydroxy equivalent (on a 100% solids basis) was 170, corresponding to OH number of 330.

### Reference Example 4: Preparation of a Urethane Coating Composition

To prepare a urethane composition or paint with the polyol #2 (prepared as described in Example 3), 10.00 g of butyl acetate were added to a metal container,
followed by 144.07 g of polyol #2. An additional quantity of butyl acetate was then added with agitation, along with the pigments, dispersing agents, flocculating agents, catalysts and the like, required to formulate a paint of a specific volume. The ingredients were thoroughly mixed and the mixture was ground in a horizontal media mill to a Hegman grind of 7. The ground mixture was let down into 17.09 g butyl acetate with slow agitation, and 154.7 g of polyol #2 were added, along with 67.06 g of butyl acetate, an acrylic-based tint paste, dibutyltindilaurate as a stabilizer, flow agents, pigments, and an adhesion promoter. The paint formulation was then mixed with a commercially available standard HDI trimer at a paint:isocyanate ratio of 1.63: 1.

### Example 5: Performance Testing of Coating Compositions

The paints from Examples 2 and 4 were sprayed onto unprimed or un-pretreated panels of cold rolled steel (CRS), aluminum or phosphate-treated steel, at an applied film build of about 1.4 mil. The sprayed panels were then flashed for 10 minutes and baked for 30 minutes at 180°F. The panels were scribed to metal and exposed to salt for 240 hours, followed by evaluation of various mechanical and physical properties. Results are shown in Table 1.

**Table 1: Performance Testing Results**

| Paint Composition | CRS substrate | Phosphate-treated steel substrate | Aluminum substrate |
|---|---|---|---|
| **Pencil Hardness** | | | |
| Example 2 | ≥ 2H | ≥ 2H | ≥ 2H |
| Example 4 | H | H | H |

| **Adhesion** | | | |
|---|---|---|---|
| Example 2 | 5B | 5B | 5B |
| Example 4 | 5B | 5B | 5B |

| **Mandrel bend (mm)** | | | |
|---|---|---|---|
| Example 2 | 2.5 | 7.4 | 6.9 |
| Example 4 | 0 | 0 | 0 |

| **Direct impact resistance (lb)** | | | |
|---|---|---|---|
| Example 2 | < 30 | <30 | < 30 |
| Example 4 | ≥ 40 | < 30 | < 30 |

| **Reverse impact resistance (lb)** | | | |
|---|---|---|---|
| Example 2 | < 10 | < 10 | < 10 |
| Example 4 | ≥ 20 | < 10 | ≥ 20 |

| **504 h salt fog exposure (blister rating)** | | | |
|---|---|---|---|
| Example 2 | 10 | 10 | 10 |
| Example 4 | 10 | 10 | 10 |

| **504 h humidity exposure (rust rating)** | | | |
|---|---|---|---|
| Example 2 | 10 | 10 | 10 |
| Example 4 | 9 | 10 | 10 |

| **Creep from scribe (mm)** | | | |
|---|---|---|---|
| Example 2 | 13.5 | 2 | 0 |
| Example 4 | 8.3 | 1.4 | 0 |

The foregoing detailed description and examples have been given for clarity of understanding only. No unnecessary limitations are to be understood therefrom. The invention is not limited to the exact details shown and described, for variations obvious to one skilled in the art will be included within the invention defined by the claims. The invention illustratively disclosed herein suitably may be practiced, in some embodiments, in the absence of any element which is not specifically disclosed herein.

## Claims

1. A solvent-based urethane coating composition, comprising:
(1) a polyol that is the reaction product of
(a) a resin having the general formula (I) 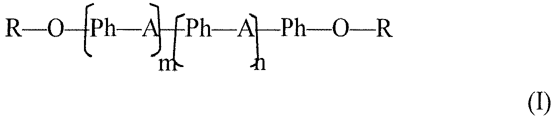 wherein:
each A is independently a substituted or unsubstituted divalent aliphatic group having from 1 to 6 carbon atoms, an unsubstituted divalent aromatic group having from 6 to 10 carbon atoms, a divalent aromatic group substituted with an organic group having from 1 to 4 carbon atoms (C1-C4 alkyl or alkenyl), a halogen, -OR'O, wherein R' is unsubstituted or substituted C₁-C₄ alkyl, -C(O)-, -O-, -S-, -S(O)-, or -S(O)₂-;
each Ph is independently an unsubstituted phenylene ring, or a phenylene ring substituted with H, C₁-C₄ alkyl, Cl, Br, or -OR;
each R is independently H, C₁-C₄ alkyl, or an epoxide of the formula 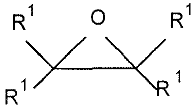
wherein R¹ is independently H, unsubstituted C₁-C₄ alkyl, or C₁- C₄ alkyl substituted with -OH, or C₁-C₄ alkoxy;
m is 0 or 1; and
n is between 0 and 6; and
(b) an acid present in an amount sufficient to react substantially all the epoxide groups, if present, in component (a), wherein the reaction is carried out in the presence of a reaction catalyst; and
(2) an isocyanate-functional compound.

2. The coating composition of claim 1, wherein each R in the general formula (I) is an epoxide wherein each R¹ is independently -CH₂- or H.

3. The coating composition of claim 1, wherein each A in the general formula (I) is a methylene group and m is 1.

4. The coating composition of claim 1, wherein each A in the general formula (I) is a phenylene ring substituted with an -OR'O- group, wherein R' is -CH₂-CH(OH)-CH₂-, and m is 0.

5. The coating composition of claim 1, wherein each Ph is independently an unsubstituted phenylene ring or a phenylene ring substituted with an -OR group, wherein R is an epoxide of the formula 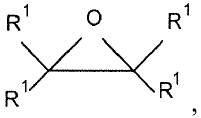 wherein each R¹ is independently -CH₂- or H.

6. The coating composition of claim 1, wherein each Ph is independently an unsubstituted phenylene ring or a phenylene ring substituted with a dimethylbenzyl group.

7. The coating composition of claim 1, wherein n is between 1.0 and 2.0.

8. The coating composition of claim 1, wherein the resin of general formula (I) has the structure: 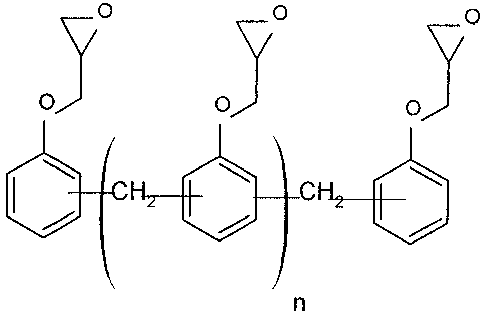 wherein n is between 1.0 and 2.0.

9. The coating composition of claim 1, wherein the acid is an aromatic acid selected from an unsubstituted aromatic acid, alkyl substituted aromatic acid, alkenyl substituted aromatic acid, or hydroxy substituted aromatic acid.

10. The coating composition of claim 1, wherein the reaction catalyst is selected from trialkyl amines, dialkylaryl amines, salts of quarternary ammonium compounds, salts of quarternary phosphonium compounds, and alkali metal halides.

11. The coating composition of claim 1, wherein the reaction catalyst is tetramethyl ammonium chloride.

12. The coating composition of claim 1, wherein the resin of general formula (I) has the structure: 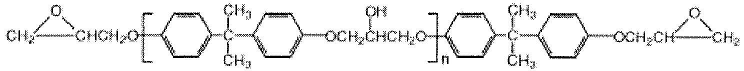 and n is 0.05 to 0.1.

13. A method of coating a substrate,
comprising: providing a metal substrate;
applying to the substrate a urethane composition comprising
a reaction product of a polyol according to claim 1; and
an isocyanate-functional compound; and curing the composition to provide a corrosion-resistant coating.

14. A method of making a polyol, comprising:
providing a resin of the general formula (I): 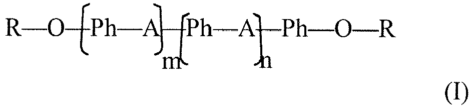 wherein:
each A is independently a substituted or unsubstituted divalent aliphatic group having from 1 to 6 carbon atoms, a substituted or unsubstituted aromatic group having from 6 to 10 carbon atoms, a divalent aromatic group substituted with an organic group having from 1 to 4 carbon atoms (C1-C4 alkyl or alkenyl), a halogen, -OR'O, wherein R' is unsubstituted or substituted C₁-C₄ alkyl, -C(O)-, -O-, -S-, -S(O)-, or -S(O)₂-;
each Ph is independently an unsubstituted phenylene ring, or a phenylene ring substituted with H, C₁-C₄ alkyl, Cl, Br, or -OR;
each R is independently H, C₁-C₄ alkyl, or an epoxide of the formula 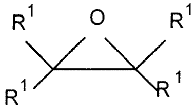
wherein R¹ is independently H, unsubstituted C₁-C₄ alkyl, or C₁- C₄ alkyl substituted with -OH, or C₁-C₄ alkoxy;
m is 0 or 1; and
n is between 0 and 6; and
reacting the resin with an acid in the presence of a reaction catalyst, wherein the acid is reacted in an amount sufficient to react substantially all the epoxide groups of the resin.

15. A solvent-based urethane coating composition, comprising a polyol made by the
method of claim 14; and an isocyanate-functional compound;
wherein the coating composition forms a corrosion resistant film when applied directly to a metal substrate without pretreatment.

## Patentansprüche

1. Eine Urethanbeschichtungszusammensetzung auf Lösungsmittelbasis, umfassend:
(1) ein Polyol, bei dem es sich um das Reaktionsprodukt
(a) eines Harzes mit der allgemeinen Formel (I) 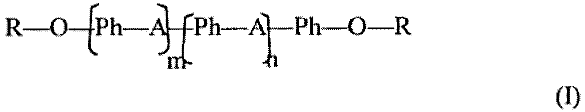 wobei:
jedes A unabhängig ein substituierter oder unsubstituierter zweiwertiger aliphatischer Rest mit 1 bis 6 Kohlenstoffatomen, ein unsubstituierter zweiwertiger aromatischer Rest mit 6 bis 10 Kohlenstoffatomen, ein zweiwertiger aromatischer Rest, substituiert mit einem organischen Rest mit 1 bis 4 Kohlenstoffatomen (C₁-C₄-Alkyl oder Alkenyl), einem Halogen, -OR'O, wobei R' unsubstituiertes oder substituiertes C₁-C₄-Alkyl ist, -C(O)-, -O-, -S-, -S(O)- oder -S(O)₂- ist;
jedes Ph unabhängig ein unsubstituierter Phenylenring oder ein Phenylenring, substituiert mit H, C₁-C₄-Alkyl, Cl, Br oder -OR, ist;
jedes R unabhängig H, C₁-C₄-Alkyl oder ein Epoxid der Formel 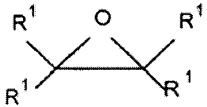
ist, wobei R¹ unabhängig H, unsubstituiertes C₁-C₄-Alkyl oder C₁-C₄-Alkyl, substituiert mit -OH, oder C₁-C₄-Alkoxy ist;
m 0 oder 1 ist; und
n zwischen 0 und 6 liegt; und
(b) einer Säure, die in einer ausreichenden Menge vorhanden ist, um im Wesentlichen alle Epoxidreste, falls vorhanden, in Komponente (a) umzusetzen, wobei die Reaktion in Gegenwart eines Reaktionskatalysators durchgeführt wird, handelt; und
(2) eine Isocyanat-funktionelle Verbindung.

2. Die Beschichtungszusammensetzung nach Anspruch 1, wobei jedes R in der allgemeinen Formel (I) ein Epoxid ist, wobei jedes R¹ unabhängig -CH₂- oder H ist.

3. Die Beschichtungszusammensetzung nach Anspruch 1, wobei jedes A in der allgemeinen Formel (I) ein Methylenrest ist und m 1 ist.

4. Die Beschichtungszusammensetzung nach Anspruch 1, wobei jedes A in der allgemeinen Formel (I) ein Phenylenring, substituiert mit einem Rest -OR'O-, ist, wobei R' gleich -CH₂-CH(OH)-CH₂- ist und m 0 ist.

5. Die Beschichtungszusammensetzung nach Anspruch 1, wobei jedes Ph unabhängig ein unsubstituierter Phenylenring oder ein Phenylenring, substituiert mit einem Rest -OR, ist, wobei R ein Epoxid der Formel ist 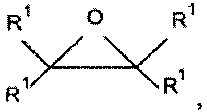 wobei jedes R¹ unabhängig -CH₂- oder H ist.

6. Die Beschichtungszusammensetzung nach Anspruch 1, wobei jedes Ph unabhängig ein unsubstituierter Phenylenring oder ein Phenylenring, substituiert mit einem Dimethylbenzylrest, ist.

7. Die Beschichtungszusammensetzung nach Anspruch 1, wobei n zwischen 1,0 und 2,0 liegt.

8. Die Beschichtungszusammensetzung nach Anspruch 1, wobei das Harz der allgemeinen Formel (I) die Struktur: 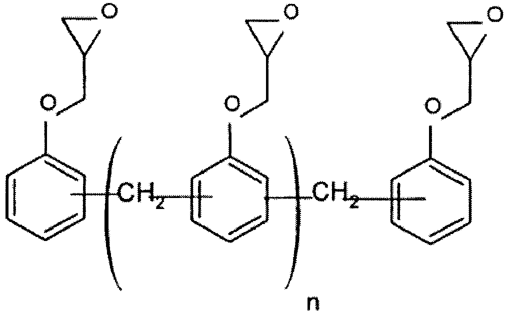 aufweist, wobei n zwischen 1,0 und 2,0 liegt.

9. Die Beschichtungszusammensetzung nach Anspruch 1, wobei die Säure eine aromatische Säure, ausgewählt aus einer unsubstituierten aromatischen Säure, Alkylsubstituierten aromatischen Säure, Alkenyl-substituierten aromatischen Säure oder Hydroxy-substituierten aromatischen Säure, ist.

10. Die Beschichtungszusammensetzung nach Anspruch 1, wobei der Reaktionskatalysator ausgewählt ist aus Trialkylaminen, Dialkylarylaminen, Salzen quartärer Ammoniumverbindungen, Salzen quartärer Phosphoniumverbindungen und Alkalimetallhalogeniden.

11. Die Beschichtungszusammensetzung nach Anspruch 1, wobei der Reaktionskatalysator Tetramethylammoniumchlorid ist.

12. Die Beschichtungszusammensetzung nach Anspruch 1, wobei das Harz der allgemeinen Formel (I) die Struktur: 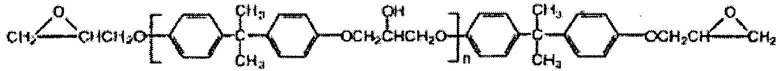 aufweist und n 0,05 bis 0,1 beträgt.

13. Ein Verfahren zur Beschichtung eines
Substrats, umfassend: Bereitstellen eines
Metallsubstrats;
Aufbringen einer Urethanzusammensetzung auf das Substrat, welche
ein Reaktionsprodukt eines Polyols nach Anspruch 1; und
eine Isocyanat-funktionelle Verbindung umfasst; und
Härten der Zusammensetzung, um eine korrosionsbeständige Beschichtung bereitzustellen.

14. Ein Verfahren zur Herstellung eines Polyols,
umfassend: Bereitstellen eines Harzes der allgemeinen Formel (I): 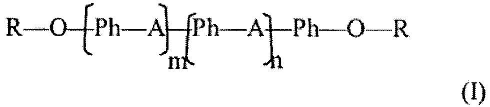 wobei:
jedes A unabhängig ein substituierter oder unsubstituierter zweiwertiger aliphatischer Rest mit 1 bis 6 Kohlenstoffatomen, ein substituierter oder unsubstituierter aromatischer Rest mit 6 bis 10 Kohlenstoffatomen, ein zweiwertiger aromatischer Rest, substituiert mit einem organischen Rest mit 1 bis 4 Kohlenstoffatomen (C₁-C₄-Alkyl oder Alkenyl), einem Halogen, -OR'O, wobei R' unsubstituiertes oder substituiertes C₁-C₄-Alkyl ist, -C(O)-, -O-, -S-, -S(O)- oder -S(O)₂- ist;
jedes Ph unabhängig ein unsubstituierter Phenylenring oder ein Phenylenring, substituiert mit H, C₁-C₄-Alkyl, Cl, Br oder -OR, ist;
jedes R unabhängig H, C₁-C₄-Alkyl oder ein Epoxid der Formel 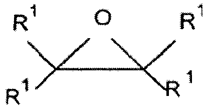
ist, wobei R¹ unabhängig H, unsubstituiertes C₁-C₄-Alkyl oder C₁-C₄-Alkyl, substituiert mit -OH, oder C₁-C₄-Alkoxy ist;
m 0 oder 1 ist; und
n zwischen 0 und 6 liegt; und
Umsetzen des Harzes mit einer Säure in Gegenwart eines Reaktionskatalysators, wobei die Säure in einer ausreichenden Menge umgesetzt wird, um im Wesentlichen alle Epoxidreste des Harzes umzusetzen.

15. Eine Urethanbeschichtungszusammensetzung auf Lösungsmittelbasis, umfassend ein Polyol, hergestellt durch das Verfahren nach Anspruch 14; und eine Isocyanat-funktionelle Verbindung;
wobei die Beschichtungszusammensetzung einen korrosionsbeständigen Film bildet, wenn sie direkt ohne Vorbehandlung auf ein Metallsubstrat aufgebracht wird.

## Revendications

1. Composition de revêtement en uréthane à base de solvant, comprenant :
(1) un polyol qui est le produit de la réaction de
(a) une résine de formule générale (I) 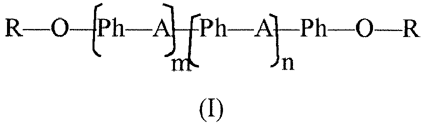 dans laquelle :
chaque A est indépendamment un groupe aliphatique divalent substitué ou non substitué ayant de 1 à 6 atomes de carbone, un groupe aromatique divalent non substitué ayant de 6 à 10 atomes de carbone, un groupe aromatique divalent substitué par un groupe organique ayant de 1 à 4 atomes de carbone (alkyle ou alcényle en C₁ à C₄), un halogène, -OR'O, où R' est un groupe alkyle en C₁ à C₄ substitué ou non substitué, -C(O)-, -O-, -S-, -S(O)- ou -S(O)₂-;
chaque Ph est indépendamment un cycle phénylène non substitué ou un cycle phénylène substitué par H, alkyle en C₁ à C₄, Cl, Br ou -OR ;
chaque R est indépendamment H, un groupe alkyle en C₁ à C₄, ou un époxyde de formule : 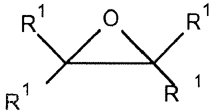
dans laquelle R¹ est indépendamment H, un groupe alkyle en C₁ à C₄ non substitué, ou un groupe alkyle en C₁ à C₄ substitué par -OH, ou un groupe alcoxy en C₁ à C₄ ;
m vaut 0 ou 1 ; et
n est compris entre 0 et 6 ; et
(b) un acide présent en une quantité suffisante pour faire réagir pratiquement tous les groupes époxydes, s'ils sont présents, dans le composant (a), laquelle réaction est mise en oeuvre en présence d'un catalyseur de réaction ; et
(2) un composé à fonctionnalité isocyanate.

2. Composition de revêtement selon la revendication 1, dans laquelle chaque R dans la formule générale (I) est un époxyde dans lequel chaque R¹ est indépendamment -CH₂- ou H.

3. Composition de revêtement selon la revendication 1, dans laquelle chaque A dans la formule générale (I) est un groupe méthylène et m vaut 1.

4. Composition de revêtement selon la revendication 1, dans laquelle chaque A dans la formule générale (I) est un cycle phénylène substitué par un groupe -OR'O- où R' est -CH₂-CH(OH)-CH₂-, et m vaut 0.

5. Composition de revêtement selon la revendication 1, dans laquelle chaque Ph est indépendamment un cycle phénylène non substitué ou un cycle phénylène substitué par un groupe -OR, où R est un époxyde de formule 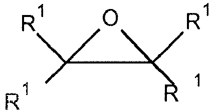 dans laquelle chaque R¹ est indépendamment -CH₂- ou H.

6. Composition de revêtement selon la revendication 1, dans laquelle chaque Ph est indépendamment un cycle phénylène non substitué ou un cycle phénylène substitué par un groupe diméthylbenzyle.

7. Composition de revêtement selon la revendication 1, dans laquelle n est compris entre 1,0 et 2,0.

8. Composition de revêtement selon la revendication 1, dans laquelle la résine de formule générale (I) a la structure : 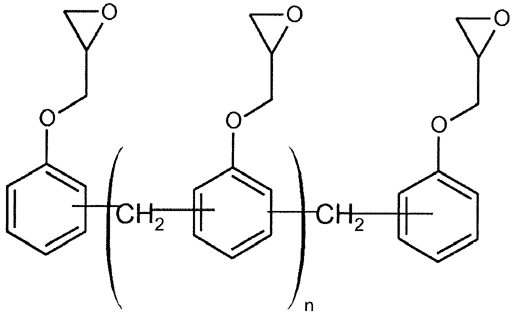 dans laquelle n est compris entre 1,0 et 2,0.

9. Composition de revêtement selon la revendication 1, dans laquelle l'acide est un acide aromatique choisi parmi un acide aromatique non substitué, un acide aromatique substitué par un alkyle, un acide aromatique substitué par un alcényle, ou un acide aromatique substitué par un hydroxy.

10. Composition de revêtement selon la revendication 1, dans laquelle le catalyseur de réaction est choisi parmi les trialkylamines, les dialkylarylamines, les sels d'ammonium quaternaire, les sels de phosphonium quaternaire, et les halogénures de métal alcalin.

11. Composition de revêtement selon la revendication 1, dans laquelle le catalyseur de réaction est le chlorure de tétraméthylammonium.

12. Composition de revêtement selon la revendication 1, dans laquelle la résine de formule générale (I) a la structure : 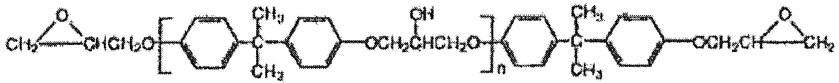 et n vaut de 0,05 à 0,1.

13. Méthode de revêtement d'un substrat, comprenant :
l'obtention d'un substrat métallique ;
l'application sur le substrat d'une composition d'uréthane comprenant un produit de la réaction d'un polyol selon la revendication 1 ; et
un composé à fonctionnalité isocyanate ; et
le durcissement de la composition pour former un revêtement résistant à la corrosion.

14. Méthode de production d'un polyol, comprenant :
l'obtention d'une résine de formule générale (I) : 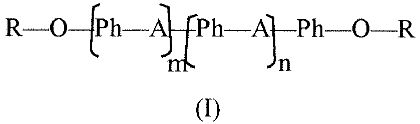 dans laquelle :
chaque A est indépendamment un groupe aliphatique divalent substitué ou non substitué ayant de 1 à 6 atomes de carbone, un groupe aromatique substitué ou non substitué ayant de 6 à 10 atomes de carbone, un groupe aromatique divalent substitué par un groupe organique ayant de 1 à 4 atomes de carbone (alkyle ou alcényle en C₁ à C₄), un halogène, -OR'O, où R' est un groupe alkyle en C₁ à C₄ substitué ou non substitué, -C(O)-, -O-, -S-, -S(O)- ou -S(O)₂-;
chaque Ph est indépendamment un cycle phénylène non substitué ou un cycle phénylène substitué par H, alkyle en C₁ à C₄, Cl, Br ou -OR ;
chaque R est indépendamment H, un groupe alkyle en C₁ à C₄, ou un époxyde de formule : 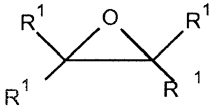
dans laquelle R¹ est indépendamment H, un groupe alkyle en C₁ à C₄ non substitué, ou un groupe alkyle en C₁ à C₄ substitué par -OH, ou un groupe alcoxy en C₁ à C₄ ;
m vaut 0 ou 1 ; et
n est compris entre 0 et 6 ; et
la réaction de la résine avec un acide en présence d'un catalyseur de réaction, lequel acide est mis à réagir en une quantité suffisante pour faire réagir pratiquement tous les groupes époxyde de la résine.

15. Composition de revêtement en uréthane à base de solvant, comprenant un polyol préparé par la méthode de la revendication 14 ; et un composé à fonctionnalité isocyanate ;
dans laquelle la composition de revêtement forme un film résistant à la corrosion quand elle est appliquée directement sur un substrat métallique sans prétraitement.
